(19) Europäisches Patentamt
European Patent Office
Office européen des brevets

(11) **EP 4 428 806 A1**

(12) **EUROPEAN PATENT APPLICATION**

(43) Date of publication:
**11.09.2024 Bulletin 2024/37**

(21) Application number: **24159206.2**

(22) Date of filing: **22.02.2024**

(51) International Patent Classification (IPC):
**G06T 3/4053** (2024.01)  **G06N 3/0464** (2023.01)
**G06N 3/08** (2023.01)  **G06T 5/70** (2024.01)

(52) Cooperative Patent Classification (CPC):
**G06T 3/4053; G06N 3/0464; G06N 3/08;**
**G06T 5/70;** G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.03.2023 GB 202303244**

(71) Applicant: **Milestone Systems A/S
2605 Brøndby (DK)**

(72) Inventors:
• **AAKERBERG, Andreas
2605 Brøndby (DK)**
• **NASROLLAHI, Kamal
2605 Brøndby (DK)**
• **MOESLUND, Thomas B.
2605 Brøndby (DK)**

(74) Representative: **Canon Europe Limited
European Intellectual Property Group
4 Roundwood Avenue
Stockley Park
Uxbridge UB11 1AF (GB)**

(54) **A METHOD OF TRAINING A NEURAL NETWORK, APPARATUS AND COMPUTER PROGRAM FOR CARRYING OUT THE METHOD**

(57)     A method of training a neural network to extract a degradation map from a degraded image comprises generating training data comprising pairs of images, each pair of images comprising a clean source image and a degraded source image by, for each clean source image, generating a corresponding noisy image by adding spatially invariant noise to the clean source image, and blending the noisy image with the clean source image according to varying intensity levels defined by a spatially variant mask to obtain the degraded image. The training data is used to train the neural network by inputting each degraded source image to the neural network and extracting a degradation map from the degraded source image such that when the degradation map is applied to its corresponding clean source image the loss between the degraded source image and its corresponding clean source image after the degradation map is applied is minimised.

FIGURE 1

**Description**

**Technical Field**

The present invention relates to a method of training a neural network to extract a degradation map from a degraded image and a super resolution imaging method using the extracted degradation map, an apparatus and a computer program for carrying out the method.

**Background**

Image Super-Resolution (SR) aims to enhance the resolution and details of low resolution (LR) images to generate High-Resolution (HR) images. Most recent SR methods accomplish this task by learning a mapping from LR images, generated synthetically by bicubic downsampling, to the corresponding HR images. However, Deep Neural Network (DNN)-based SR methods often suffer from overfitting to the training data distribution, which consequently leads to decreased performance when applied to images with different degradations (ie noise).

Recent attempts to overcome this problem include elaborate degradation models [Jingyun Liang et al: Image restoration using swin transformer, In IEEE International Conference on Computer Vision Workshops, 2021; Chong Mou et al. Metric learning based interactive modulation for real-world super-resolution, In European Conference on Computer Vision, pages 723-740, Springer, 2022; Kai Zhang et al, Designing a practical degradation model for deep blind image super-resolution, IEEE International Conference on Computer Vision, pages 4791-4800, 2021] and network conditioning based on degradation estimation [Jie Liang et al, Efficient and degradation-adaptive network for real-world image super-resolution, European Conference on Computer Vision, 2022].

US2022/0148130 discloses an image restoration method that combines image super resolution and denoising, including a step of generating a noise map and inputting this into a CNN (SR subnetwork). The noise map is itself generated by a noise estimator CNN (NE subnetwork), which is trained using pairs of LR and HR images generated by creating each noisy LR image from a corresponding clean HR image by downsampling and adding white Gaussian noise.

Therefore, while many methods have been proposed to solve the Super-Resolution (SR) problem of Low-Resolution (LR) images with complex unknown degradations, their performance still drops significantly when evaluated on images with challenging real-world degradations.

**Summary of the Invention**

The present invention provides a method of training a neural network to extract a degradation map from a degraded image according to claim 1. The present invention also provides a computer program for carrying out the method according to claim 11, and an apparatus according to claim 12.

Preferred aspects are set out in claims 2 to 7, and 13 to 16.

The present invention also provides a computer implemented super resolution imaging method for generating a higher resolution image with reduced noise from a degraded lower resolution image that includes noise, in which a pixel level degradation map obtained by the method above, and a feature map of the degraded lower resolution image are input to a second trained neural network to perform a pixel-wise feature modulation to generate the higher resolution image with reduced noise.

One often overlooked factor contributing to the poor performance of prior art methods on real-world degradations, is the presence of spatially varying degradations in real LR images. To address this problem, the invention provides a degradation pipeline capable of generating paired LR/HR images with spatially varying noise, a key contributor to reduced image quality.

Prior art methods assume uniformly distributed degradations and hereby ignore the phenomenon of spatially varying noise present in real images acquired in photon-limited situations. This key factor compromising the image quality is not contingent upon specific image sensors, but a result of the physics involved in the imaging process, such as random photon arrival and non-ideal-sensor characteristics, which may lead to higher Signal-to-Noise Ratio (SNR) in brighter pixels (low noise) and lower SNR in darker pixels (high noise). Since the SNR is ultimately controlled by the quantum nature of light, the noise stemming from this phenomenon is an inherent characteristic of any realizable imaging device operating under natural settings.

In addition to the extraction of a degradation map, the invention provides a Super-Resolution model capable of adapting the reconstruction process based on the degradation map.

**Brief Description of the Drawings**

Embodiments of the invention will now be described, with reference to the accompanying drawings, in which:

Figure 1 is a block diagram of the architecture of a super-resolution system;
Figure 2 illustrates examples of different masks used to add spatially variant noise to clean source images, and the resulting noisy images;
Figure 3 shows details of a degradation feature extraction block;
Figure 4 shows details of a spatial feature transformation block;
Figure 5 shows the performance of an embodiment of the invention and comparative examples on real world images; and
Figure 6 shows the performance of an embodiment of the invention and comparative examples on real world images at different ISO values.

## Detailed Description of the Embodiments

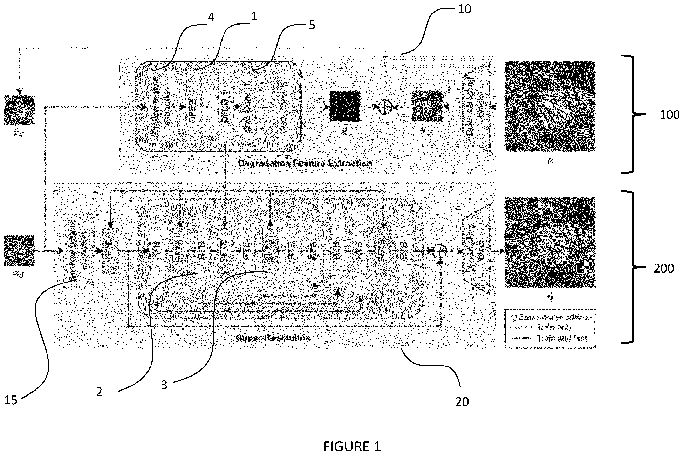

Figure 1 illustrates an overview of a super-resolution network, comprising a degradation map extraction block 100 and a super resolution block 200. Figure 1 shows both the paths taken during training, and after training (testing), which will be described in more detail below. The degradation map extraction block 100 includes a first neural network which is a degradation feature extraction network 10 including Degradation Feature Extraction Blocks (DFEBs) 1 that perform pixel-wise degradation modelling to obtain a pixel level degradation map a from an input image $x_d$ which is a degraded (ie with noise) lower resolution image. The pixel level degradation map a is a degradation map in the image space. The super resolution block 200 includes a second neural network which is a super resolution network 20 that takes the degraded lower resolution image $x_d$ and generates a feature map of the degraded lower resolution image $x_d$, inputs the feature map and a degradation feature map d corresponding to the pixel level degradation map a from the degradation map extraction block 100 and and performs a pixel-wise feature modulation to generate a higher resolution image $\hat{y}$ with reduced noise. The degradation feature map d is a feature space degradation map corresponding to the image space pixel level degradation map d.

The super resolution network 20 comprises Restormer Transformer Blocks (RTBs) 2 and Spatial Feature Transformation Blocks (SFTBs) 3. The Restormer Transformer is described in Syed Waqas Zamir et al, "Restormer: Efficient transformer for high-resolution image restoration", CoRR, abs/2111.09881, 2021. The RTBs 2 are organized in a U-Net shaped architecture together with the Spatial Feature Transformation Blocks (SFTBs) 3.

The above architecture provides a super-resolution model that is conditioned on pixel-wise degradation features provided by the degradation map extraction block 100 for improved refinement of location specific degradations.

The components, training and operation of the super-resolution network of Figure 1 will now be described in more detail.

## Degradation Map Extraction Block

A necessity for a Deep Neural Network (DNN) based super resolution model to perform well is prior training on equivalent training data. A known degradation pipeline for creating realistic LR/HR training image pairs involves convolution with a blur kernel k on the HR image y, followed by downsampling with scale factor s, and lastly, degradation by additive noise to produce the degraded LR image $x_d$. The pipeline is described as:

$$x_d = (y \circledast k) \downarrow s + n$$

However, a limitation of this method is the use of spatially uniform degradations, which limits the generalization performance on real images.

In the present invention, the degradation map extraction block 100 is trained using pairs of training images y, $x_d$ generated by a degradation model that comprises synthesizing degraded low resolution source images $x_d$ from clean source images y by downsampling and addition of spatially variant noise. Thus, the present invention uses a method of generating the LR/HR training image pairs such that the noise strength varies spatially across the image, which better resembles the distribution of noise in real images, which varies naturally as a result of different Signal-to-Noise Ratio (SNR) levels. More specifically, the degraded source images $x_d$ are synthesized from the clean source images y with spatially varying noise by the concept of mask blending. First, a clean source image y is downsampled to a LR image x. A mask m of the same spatial size as the LR image x is generated, which contains either a randomly oriented and randomly shaped gradient mask, or a mask based on the image brightness level. Next, a noisy image $x_n$ is generated by adding spatially invariant Gaussian or Poisson noise to x. Then x and $x_n$ are blended according to the varying intensity levels defined in the mask, to form the degraded image $x_d$ with spatially varying noise:

$$x_d = (1 - m) * x + x_n * m$$

The noise addition could be carried out before the downsampling, but for computational efficiency the downsampling preferably occurs first. Also, adding noise before the downsampling would change the noise distribution.

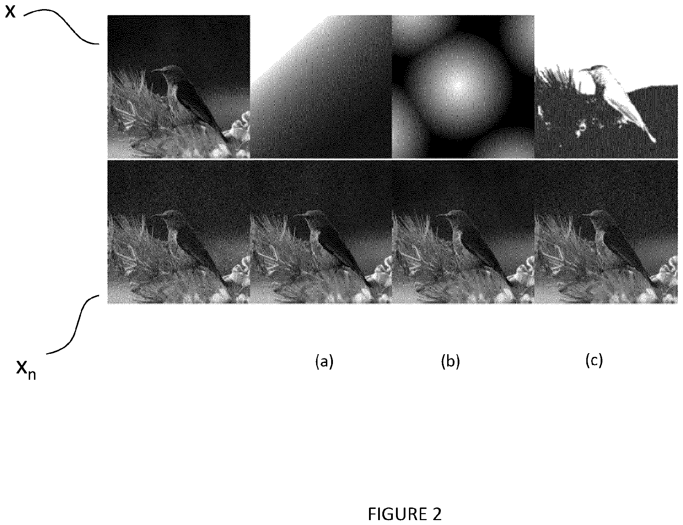

Examples of different masks and the resulting noisy images are shown in Figure 2. The top left image is the downsampled clean source image x, the bottom left is the downsampled clean source image corrupted by uniform noise $x_n$. Examples (a)-(c) show masks m and the resulting noisy images $x_d$ for masks with a linear gradient (a), a radial gradient (b) and a brightness dependent mask (c). In the brightness dependent mask, the mask includes higher values in areas with lower brightness. Note that the aim is not to accurately model camera specific noise distributions, but rather to introduce the concept of spatially variant noise into the training of the degradation feature extraction network 10, and thereby facilitate learning spatially variant noise suppression in real images.

During training, the degradation feature extraction network 10 estimates the degradation of an input image which is a degraded low resolution source image $x_d$ on a pixel level, and estimates the degradations by learning to extract the degradations directly from the degraded source image $x_d$ to generate an image space degradation map d. More specifically, as shown in Figure 1, the degradation feature extraction network 10 takes as input the degraded LR source image $x_d$, which is a degraded LR version of y with spatially variant degradations, generated as described above. The degradation feature extraction network 10 comprises an extraction convolutional layer in the form of a shallow feature extraction block 4 comprising a $7 \times 7$ convolutional layer configured to extract features from each degraded source image $x_d$. Next, a plurality of degradation feature extraction blocks 1 process the features to extract spatially invariant degradation features, and a plurality of mapping convolutional layers 5 are configured to map the remaining degradation features to a plurality of channels to generate the degradation map d. The example of Figure 1 includes nine DFEBs 1 configured to extract spatially invariant degradation features, and the deep degradation features are mapped to 3-channels by five $3 \times 3$ convolutional layers 5 to form the degradation map d. However, different numbers of DFEBs and mapping convolution layers may be used, preferably 7 to 11 DFEBs and 3 to 7 mapping convolution layers.

The degradation feature extraction network 10 is trained by inputting each degraded source image $x_d$ of each training image pair and extracting a degradation map a such that when the degradation map a is applied to the corresponding clean source image y of the training image pair, the loss between the degraded source image $x_d$ and its corresponding clean source image after the degradation map is applied is minimised. As shown in Figure 1, during training, the degradation map a is combined with a bicubicly downsampled version of the HR clean source image y by element-wise addition to produce $\hat{x}_d$. The degradation feature extraction network 10 is optimized by the loss between $\hat{x}_d$ and $x_d$.

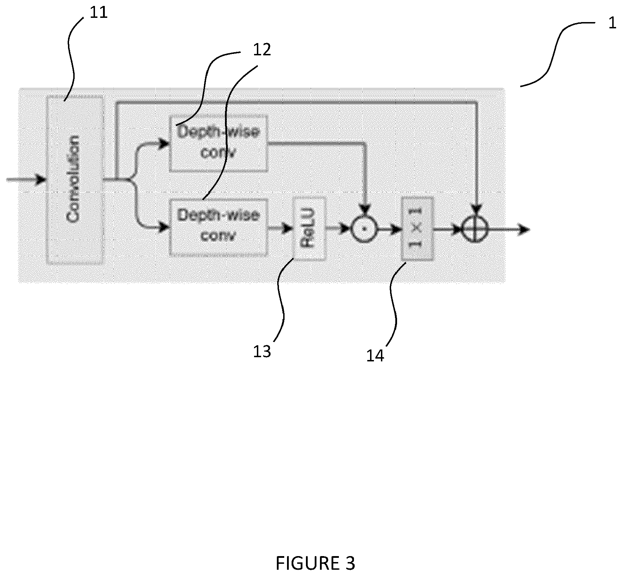

The design of each of the DFEBs 1 is shown in Figure 3, and combines a gating mechanism and depth-wise convolutions for efficient extraction of local degradation information. In each DFEB 1, information is first processed by one $3 \times 3$ convolutional layer 11 with LeakyReLU followed by two parallel paths through depth-wise convolutional layers 12, where one is activated with a ReLU non-linearity 13. Lastly, the two paths are combined by taking the element-wise product followed by a $1 \times 1$ convolutional layer 14. An additive skip connection is used to allow direct information flow from the initial convolutional layer 11.

The degradation feature extraction network 10 is optimized by the loss between $\hat{x}_d$ and $x_d$. To encourage images with similar frequency distributions a combination of SSIM and focal frequency loss was used. The whole degradation feature extraction model has a moderate receptive field of $51 \times 51$ and 4.6M parameters. During inference, degradation features are extracted as a degradation feature map from the 9th DFEB to condition the super resolution block 200.

**Super Resolution Block**

As shown in Figure 1, the super resolution block 200 comprises the super resolution network 20 that comprises Restormer Transformer Blocks (RTBs) 2 and Spatial Feature Transformation Blocks (SFTBs) 3. The Restormer Transformer is described in Syed Waqas Zamir et al, "Restormer: Efficient transformer for high-resolution image restoration", CoRR, abs/2111.09881, 2021. The RTBs 2 are organized in a U-Net shaped architecture together with the Spatial Feature Transformation Blocks (SFTBs) 3.

To condition the super resolution network 20 on the pixel-wise degradation map a estimated by the degradation feature extraction network 10, the super resolution network 20 is designed to transform the deep spatial features of the super resolution block network 20 adaptively and individually for each pixel accordingly.

The super resolution network 20 follows the Restormer architecture, and includes an initial 3x3 convolution layer 15 that extracts shallow features f. These are the modulated by the first SFTB.

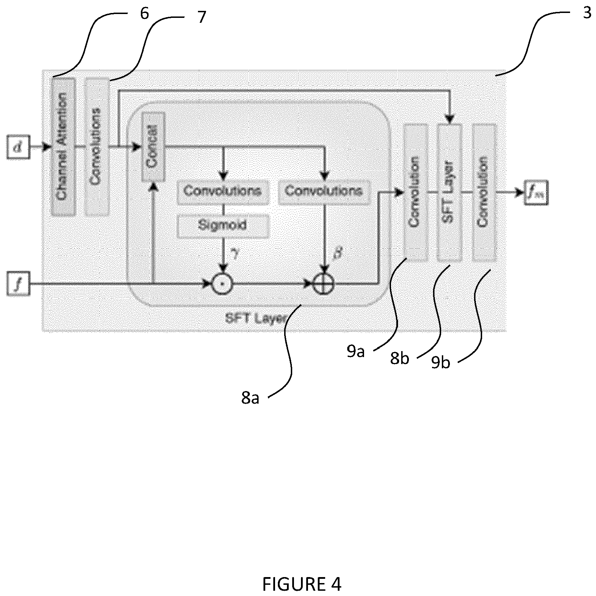

Figure 4 illustrates the configuration of each of the SFTBs 3. The SFTB 3 takes the degradation feature map d and a feature map f of the same spatial dimensions as input. First, channel-wise attention 6 is applied to d, followed by two convolutional layers 7 with LeakyReLu to reduce the channel dimension from 256 to the same dimension as the feature maps in the super resolution network 20. As each SFTB 3 shares the same degradation map, the channel attention 6 serves to emphasize the most relevant degradation features for each part of the super resolution network 20. Next, feature transformation is performed by two Spatial Feature Transformation (SFT)-layers 8a, 8b, each followed by convolutional layers 9a, 9b, which learn parameters for a spatially affine transformation of each feature map individually.

In each STT layer 8a, 8b, feature maps f are conditioned on the degradation map d by a scaling and shifting operation:

$$SFT(f, d) = \gamma \odot f + \beta$$

where $\gamma$ and $\beta$ are the scaling and shifting parameters and $\odot$ represents the element-wise addition operation. To avoid mixing spatially adjacent degradations, the filter size of all convolutional layers in the feature transformation block are $1 \times 1$. Furthermore, multiple separate SFTBs are included in the super resolution network 20, as the deep features propagating through the network have different sensitivity to the degradations for each level in the network.

**SVSR Benchmarking Dataset**

A Spatially Variant Super-Resolution (SVSR) benchmarking dataset was used to compare the performance of the method of the present invention with known methods. The SVSR dataset can be found at https://zenodo.org/records/10044260, and the data collection method for this dataset along with an analysis of its characteristics will be described below.

The purpose of the SVSR dataset is to enable evaluation of Super Resolution methods on real LR images with challenging and spatially variant degradations. To achieve this, the dataset should include high-quality HR reference images and corresponding low-quality LR images.

To capture static scenes with diverse content, both in- and outdoors, three different Canon® Digital single-lens reflex (DSLR) cameras, two different zoom lenses, and three different aperture values were used. This ensured diverse degradations, as the noise characteristics and point-spread-function vary between the different cameras, lenses, and aperture settings. A scale difference was obtained by changing the focal length of the zoom lenses, to collect image pairs of both $\times 2$ and $\times 4$ scale difference. To obtain varying degrees of noise, multiple images of the same static scene were captured using aperture priority and changing the camera's ISO setting. At low ISO settings (low signal gain) the camera will produce the most noise-free images, while at higher ISO settings, and appropriately shorter exposure times, the images will contain more noise due to the lower signal-to noise ratio. Hence, the clean images were captured at the camera's native ISO setting (ISO100), while the noisy images were captured at incrementally higher ISO levels up to the maximum setting for each camera. ISO1600 was established as the threshold to distinguish noisy images, as this is the point at which all three cameras introduced visible noise.

The captured dataset comprises a total of 978 images, with 141 noise-free images for each scale level, and 555 images as the noisy LR counterparts.

A breakdown of the dataset is set out below.

| Camera | ISO | | | | | | |
|---|---|---|---|---|---|---|---|
| | 1600 | 3200 | 6400 | 12800 | 25600 | 51200 | 65535 |
| Canon 6D | ✓ | ✓ | ✓ | ✓ | ✓ | ✓ | ✓ |
| Canon 600D | ✓ | ✓ | ✓ | X | X | X | X |
| Canon 1Ds Mark II | ✓ | ✓ | X | X | X | X | X |
| Total noisy LR images | 141 | 141 | 93 | 45 | 45 | 45 | 45 |

Note that due to different technologies, images captured at the same ISO setting by different cameras do not necessarily contain similar noise levels and types.

Even though the image collection was done with the camera mounted on a tripod and using a remote trigger, misalignment between the LR and HR image pairs can still occur, as the different focal lengths distort the image differently. To mitigate this, a preprocessing pipeline was applied.

First, the lens distortion was removed using Adobe Lightroom ®, followed by centre cropping to keep only the sharpest part of the images. Next, pixel-wise registration of LR and HR images was obtained using a luminance-aware iterative algorithm, which was found to be more accurate for the highly noisy images, compared to keypoint-based algorithms. To maintain the scale difference between the LR and HR images, the alignment was performed in LR space. Finally, all image pairs were examined, and ones with misalignment, out-of-focus, or other unwanted defects were discarded. The resulting image pairs have a resolution of 640×640, 1280×1280, and 2560×2560px for the ×1, 2, and 4 scale factors, respectively.

To quantify the effect of varying ISO levels on the image the table below presents the average standard deviation of the noise, and the average change in image fidelity and perceptual quality as the ISO increase. As seen, high ISO settings results in higher noise contributions, which translates to accordingly lower image quality, e.g. the Peak Signal-to-Noise Ratio (PSNR) for the highest ISO setting is 12.53dB lower than for ISO1600.

| ISO | $\sigma$ | PSNR↑ | SSIM↑ | LPIPS↓ | DISTS↓ |
|---|---|---|---|---|---|
| 100 | 0.0 | $\infty$ | 1.0 | 0.0 | 0.0 |
| 1600 | 4.93 | 34.32 | 0.9041 | 0.0305 | 0.0780 |
| 3200 | 6.43 | 32.06 | 0.8516 | 0.0711 | 0.1203 |
| 6400 | 8.06 | 30.18 | 0.8318 | 0.1061 | 0.1543 |
| 12800 | 9.38 | 28.77 | 0.7813 | 0.1403 | 0.1670 |
| 25600 | 12.31 | 26.37 | 0.6420 | 0.2693 | 0.22.32 |
| 51200 | 15.15 | 24.58 | 0.5649 | 0.3364 | 0.2525 |
| 65535 | 20.87 | 21.79 | 0.4239 | 0.4562 | 0.3015 |

## First Embodiment

In the embodiment of the invention used for testing, the DIV2K [Eirikur Agustsson and Radu Timofte. Ntire 2017 challenge on single image super-resolution: Dataset and study. In The IEEE Conference on Computer Vision and Pattern Recognition (CVPR) Workshops, July 2017*]* and Flick2K [*See* Lim, Sanghyun Son, Keewon Kim, Seungjun Nah, and Kyoung Mu Lee. Enhanced deep residual networks for single image super-resolution. In Proceedings of the IEEE conference on computer vision and pattern recognition workshops, pages 136-144, 2017*J* datasets were used for training.

The training images were degraded using the spatially variant noise degradation model described above together with the degradation pipeline described in "Kai Zhang, Jingyun Liang, Luc Van Gool, and Radu Timofte. Designing a practical degradation model for deep blind image super-resolution. In IEEE International Conference on Computer Vision, pages 4791-4800, 2021" (Zhang et al), by replacing the degradation with uniform Gaussian noise in Zhang et al with spatially variant Gaussian and Poisson noise. The noise standard deviation was set to [1,50] and scale to [2,4] for Gaussian and Poisson noise, respectively. The remaining steps in the degradation pipeline include Gaussian blur, downsampling and JPEG compression noise, with the same hyperparameters as defined in Zhang et al for comparability. As such, any performance improvements related to the degradation modelling are solely due to the introduction of spatially variant noise.

We perform experiments on Restormer [Syed Waqas Zamir, Aditya Arora, Salman H. Khan, Munawar Hayat, Fahad Shahbaz Khan, and Ming-Hsuan Yang. Restormer: Efficient transformer for high-resolution image restoration. CoRR, abs/2111.09881, 2021], a Transformer based image reconstruction model, where we add SFTBs for each encoder level, and before the final refinement block. We use average pooling of the degradation maps to match the spatial dimensions of the feature maps at the different encoder levels. ×4 upsampling is done as final step by nearest-neighbour interpolation + convolutional- layers. Otherwise, the architecture follows the original implementation. The degradation feature extraction network 10 and the super resolution network 20 were jointly trained for 1M iterations with a batch size of 16 using the ADAM optimizer [Diederik P. Kingma and Jimmy Ba. Adam: A method forstochastic optimization. CoRR, abs/1412.6980, 2014.], a learning rate of 2×10-4, LR patch sizes of 64×64, and L1-loss.

The performance of the embodiment and the comparative examples was tested on the SVSR dataset discussed above, for evaluation on real-world degraded LR images. For evaluation on images with synthetic degradations Set14 [Roman Zeyde, Michael Elad, and Matan Protter. On single image scale-up using sparse-representations. In Curves and Surfaces: 7th International Conference, Avignon, France, June 24-30, 2010, Revised Selected Papers 7, pages 711- 730. Springer, 2012], BSD100 [David R. Martin, Charless C. Fowlkes, Doron Tal, and Jitendra Malik. A database of human segmented natural images and its application to evaluating segmentation algorithms and measuring ecological statistics. In Proceedings Eighth IEEE International Conference on Computer Vision. ICCV 2001, volume 2, pages 416-423 vol.2, 2001] and Urban100 [Narendra Ahuja Jia-Bin Huang, Abhishek Singh. Single image super-resolution from transformed self-exemplars. In 2015 IEEE Conference on Computer Vision and Pattern Recognition (CVPR), pages 5197-5206, 2015] which are degraded by additive Gaussian noise with zero mean and standard deviation $\sigma$ = 15, 25, 50, respectively were used.

As metrics, the reconstruction performance were evaluated using two hand-crafted (PSNR, SSIM), and two DNN-based (LPIPS, DISTS) Full-Reference Image Quality Assessment (FR-IQA) metrics. PSNR (peak signal to noise ratio) reports the image fidelity as a measure of the peak pixel-wise error between the prediction and target, while SSIM (structural similarity index), LPIPS (learned perceptual image patch similarity), and DISTS (deep image structure and texture similarity) are more focused on the perceived image quality.

## Comparative Examples

The performance of the embodiment was compared with a number of prior art real world super resolution methods. These included one codebook based method (FeMaSR), two degradation estimation and adaptation-based methods (DASR and DAN), five methods relying on elaborate degradation modelling (Real-ESRNet, MM-RealSRNet, BSRNet, PDM-SR) and Transformers (SwinIR), and for completeness, one method trained on bicubicly downsampled images (RRDBNet). For reference, a filter-based method i.e. $3 \times 3$ Median filter followed by Bicubic upsampling was also used. For all DNN-based methods, the pre-trained weights provided by the authors were used for enhancement of real images and optimized for PSNR, rather than perceptual quality, since the goal is to restore the original image with the highest possible fidelity.

## Comparison Results on Synthetic Data

As mentioned above, for evaluation on images with synthetic degradations Set14, BSD100 and Urban100 datasets were used, which are degraded by additive Gaussian noise with zero mean and standard deviation $\sigma$ = 15, 25, 50, respectively. The following Table shows the results. In this experiment, where the degradations are uniformly distributed, the embodiment of the invention (PDA-RWSR) outperforms all the competing methods on both noise levels, except for $\sigma$15 on Urban100 where the present invention performs comparably with Real-ESRNet.

| DN | SR | Method | Set14 [50] | | BSD100 [35] | | Urban100 [23] | |
|----|----|--------|-------------|-------------|--------------|--------------|----------------|----------------|
| | | | $\sigma = 15$ | $\sigma = 25$ | $\sigma = 15$ | $\sigma = 25$ | $\sigma = 15$ | $\sigma = 25$ |
| ✓ | ✓ | PDM-SR [33] | 19.83 | 17.27 | 19.36 | 16.87 | 18.36 | 16.69 |
| ✗ | ✓ | RRDB [45] | 19.84 | 16.48 | 19.81 | 16.42 | 18.96 | 15.98 |
| ✓ | ✗ | $3 \times 3$ Median+Bic | 20.38 | 19.89 | 21.56 | 21.05 | 19.13 | 18.79 |
| ✓ | ✓ | DAN [34] | 20.98 | 18.07 | 20.73 | 17.95 | 19.79 | 17.26 |
| ✓ | ✓ | FeMaSR [9] | 21.89 | 21.41 | 21.80 | 21.40 | 20.00 | 19.67 |
| ✗ | ✗ | Bicubic | 22.05 | 19.76 | 22.08 | 19.76 | 20.22 | 18.56 |
| ✓ | ✓ | BSRNet [53] | 22.08 | 19.58 | 22.14 | 19.66 | 20.81 | 18.98 |
| ✓ | ✓ | DASR [31] | 23.26 | 21.73 | 23.14 | 21.84 | 21.26 | 20.14 |
| ✓ | ✓ | MM-RealSRNet [37] | 23.41 | 22.69 | 23.68 | 23.04 | 21.38 | 20.90 |
| ✓ | ✓ | Real-SwinIR-L [29] | 23.61 | 22.12 | 23.75 | 22.48 | 21.96 | 20.91 |
| ✓ | ✓ | Real-ESRNet [43] | 23.93 | 22.74 | 23.90 | 22.97 | **22.06** | 21.24 |
| ✓ | ✓ | PDA-RWSR (Ours) | **24.07** | **23.12** | **24.10** | **23.29** | 22.04 | **21.41** |

## Comparison Results on Synthetic Data

The performance of the embodiment (PDA-RWSR) and the comparative examples was tested on the SVSR dataset disclosed above, for evaluation on real-world degraded LR images with complex degradations. The table below shows the results.

| DN | SR | Method | SSIM ↑ | PSNR ↑ | LPIPS ↓ | DISTS ↓ |
|----|----|--------|--------|--------|---------|---------|
| ✓ | ✓ | FeMaSR [9] | 0.5914 / 0.3535 | 22.87 / 18.66 | 0.2772 / 0.5176 | 0.1557 / 0.2813 |
| ✓ | ✓ | PDM-SR [33] | 0.6685 / 0.3891 | 23.82 / 18.84 | 0.3047 / 0.5367 | 0.1805 / 0.2838 |
| ✗ | ✓ | RRDB [45] | 0.7073 / 0.4380 | 24.69 / 20.00 | 0.3011 / 0.5579 | 0.1745 / 0.2602 |
| ✓ | ✓ | DAN [34] | 0.7085 / 0.4450 | 24.69 / 20.03 | 0.2997 / 0.5527 | 0.1741 / 0.2895 |
| ✓ | ✓ | DASR [31] | 0.7092 / 0.3990 | 24.53 / 19.79 | 0.2478 / 0.4917 | 0.1577 / 0.2779 |
| ✗ | ✗ | Bicubic | 0.7282 / 0.4920 | 24.84 / 20.41 | 0.3093 / 0.5439 | 0.1717 / 0.2828 |
| ✓ | ✓ | Real-ESRNet [43] | 0.7650 / 0.6043 | 24.32 / 20.84 | 0.2063 / 0.4008 | 0.1407 / 0.2265 |
| ✓ | ✗ | $3 \times 3$ Median+Bic. | 0.7690 / 0.6412 | 25.08 / 21.51 | 0.2953 / 0.4350 | 0.1687 / 0.2587 |
| ✓ | ✓ | MM-RealSRNet [37] | 0.7708 / 0.6302 | 24.26 / 21.17 | 0.2071 / 0.3836 | 0.1501 / 0.2280 |
| ✓ | ✓ | BSRNet [53] | 0.7844 / 0.6707 | 25.13 / 21.71 | 0.2067 / 0.3563 | 0.1401 / 0.2148 |
| ✓ | ✓ | Real-SwinIR-L [29] | 0.7853 / 0.6818 | 25.01 / 21.96 | 0.1956 / 0.3395 | 0.1442 / 0.2074 |
| ✓ | ✓ | PDA-RWSR (Ours) | **0.7943 / 0.7427** | **25.16 / 22.56** | **0.1916 / 0.2985** | **0.1374 / 0.2043** |

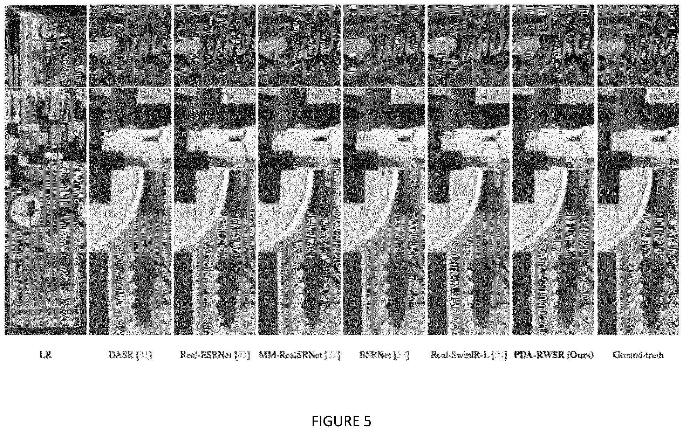

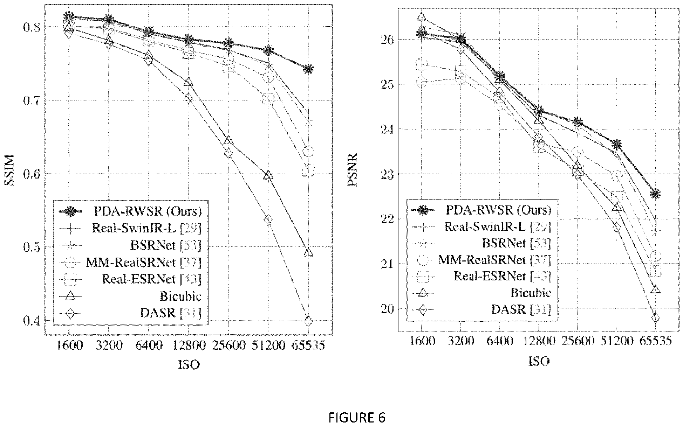

Contrary to the experiments on synthetic data, the SVSR dataset poses a more challenging reconstruction task, where the assumption of spatially invariant Gaussian noise employed by most of the comparative example methods will not hold. As such, the global degradation estimation-based methods (DASR, DAN) cannot handle such real-world scenarios, resulting in low performance based on all Image Quality Assessment (IQA) metrics. Furthermore, while methods based on elaborate degradation models (Real-ESRNet, MM-RealSRNet, BSRNet, PDM-SR, Swin-IR) are trained on more complex degradations, their reconstruction quality is very inconsistent on images with spatially variant noise from the SVSR dataset. This can be seen visually in Figure 5, and from the plot in Figure 6 where their performance drops sharply as the ISO level increases. On the contrary, the embodiment of the invention (PDA-RWSR) performs better and more consistently across the range. This is also reflected in Figure 5, where the reconstructions by the method of the embodiment are more faithful with fewer artifacts, proving the superiority of the method of the embodiment for dealing with real-world degradations.

**Ablation Study of Degradation Models**

To demonstrate the contribution of the degradation model of the present invention, a comparison of different models was carried out. In the table below, DM and FM denote the degradation model, and whether the model uses feature modulation, respectively. Giga Multiply-Accumulates per Second (GMACS) are computed for an input image of 64X64 pixels.

| Name | DM | FM | Params$\times 10^6$ | GMACs | SSIM $\uparrow$ | PSNR $\uparrow$ |
|---|---|---|---|---|---|---|
| A | Bicubic | X | 26.2 | 12.1 | 0.7058 | 24.68 |
| B | BSRNet [53] | X | 26.2 | 12.1 | 0.7736 | 25.03 |
| C | Ours | X | 26.2 | 12.1 | 0.7906 | 25.12 |
| D | Ours | ✓ | 28.4 | 51.4 | 0.7943 | 25.16 |

It can be seen that using the degradation model of the present invention with spatially variant noise (C) results in 0.09dB higher PSNR compared to using the degradation model from BSRNet (B). The complementary effect between the spatially variant degradation model and the per-pixel-based degradation feature extraction and adaptation method (D) results in the best performance, although with the cost of additional computations.

In conclusion, the present invention makes significant progress towards SR of real images with complex and spatially varying degradations. This is enabled by a method of training a neural network to extract a degradation map using training data comprising pairs of images, each pair of images comprising a clean source image and a degraded source image. The pairs of images are generated by, for each clean source image, generating a corresponding noisy image by adding spatially invariant noise to the clean source image, and blending the noisy image with the clean source image according to varying intensity levels defined by a spatially variant mask to obtain the degraded image.

The degradation map obtained by the above method can then be used in a computer implemented super resolution imaging method for generating a higher resolution image with reduced noise from a degraded lower resolution image that includes noise. A feature map of the degraded lower resolution image is obtained, then the degradation map and the feature map are used by a second trained neural network to perform a pixel-wise feature modulation to generate the higher resolution image with reduced noise.

Some embodiments of the invention may be implemented as a recording medium including a computer-readable instruction such as a computer-executable program module. The computer-readable recording medium may be an arbitrary available medium accessible by a computer, and examples thereof include all volatile and non-volatile media and separable and non-separable media. Further, examples of the computer-readable recording medium may include a computer storage medium and a communication medium. Examples of the computer storage medium include all volatile and non-volatile media and separable and non-separable media, which have been implemented by an arbitrary method or technology, for storing information such as computer-readable instructions, data structures, program modules, and other data. The communication medium generally includes a computer-readable instruction, a data structure, a program module, other data of a modulated data signal, or another transmission mechanism, and an example thereof includes an arbitrary information transmission medium.,

While the disclosure has been particularly shown and described with reference to embodiments thereof, it will be understood by one of ordinary skill in the art that various changes in form and details may be made therein without departing from the scope of the disclosure as defined by the following claims. Hence, it will be understood that the embodiments described above are not limiting of the scope of the disclosure.

The scope of the disclosure is indicated by the claims rather than by the detailed description of the disclosure, and it should be understood that the claims and all modifications or modified forms drawn from the concept of the claims are included in the scope of the disclosure.

**Claims**

1. A method of training a neural network to extract a degradation map from a degraded image, comprising:

   generating training data comprising pairs of images, each pair of images comprising a clean source image and a degraded source image by, for each clean source image, generating a corresponding noisy image by adding spatially invariant noise to the clean source image, and blending the noisy image with the clean source image according to varying intensity levels defined by a spatially variant mask to obtain the degraded image;
   using the training data to train the neural network by inputting each degraded source image to the neural network and extracting a degradation map from the degraded source image such that when the degradation map is applied to its corresponding clean source image the loss between the degraded source image and its corresponding clean source image after the degradation map is applied is minimised.

2. The method according to claim 1, wherein the degradation map is a pixel level degradation map.

3. The method according to claim 1 or 2, wherein, for each clean source image, the spatially variant mask is generated to correspond to a brightness distribution in the clean source image.

4. The method according to claim 3, wherein the spatially variant mask includes higher values in areas with lower brightness.

5. The method according to any one of the preceding claims, wherein the neural network comprises an extraction convolutional layer configured to extract features from each degraded source image, a plurality of degradation feature extraction blocks configured to process the features to extract spatially invariant degradation features, and a plurality of mapping convolutional layers configured to map the remaining degradation features to a plurality of channels to generate the degradation map.

6. The method according to any one of the preceding claims, wherein each degraded source image is a lower resolution version of its corresponding clean source image.

7. The method according to claim 6, wherein, to generate the training data, each clean source image is downsampled to a lower resolution before the spatially invariant noise is added.

8. The method according to claim 6 or 7, wherein the training of the neural network comprises downsampling each clean source image to the same resolution as its corresponding degraded source image, and applying the generated degradation map to the downsampled clean source image, wherein the neural network generates the degradation map to minimise the loss between the degraded source image and the downsampled clean source image after application of the generated degradation map.

9. A computer implemented super resolution imaging method for generating a higher resolution image with reduced noise from a degraded lower resolution image that includes noise, comprising the steps of:

   training a first neural network and using the trained first neural network to obtain a pixel level degradation map from the degraded lower resolution image by the method of claim 6, 7 or 8,
   obtaining a feature map of the degraded lower resolution image, inputting the feature map to a second trained neural network to perform a pixel-wise feature modulation based on the pixel level degradation map to generate the higher resolution image with reduced noise.

10. The method according to claim 9, wherein the second trained neural network comprises a plurality of spatial feature transformation blocks configured to transform the feature map based on the degradation map.

11. The method according to claim 10, wherein each spatial feature transformation block comprises convolutional layers having a 1X1 filter size.

12. A computer program comprising instructions which, when the program is execute by a computer, cause the computer to carry out the method of any one of the preceding claims.

13. An apparatus for extracting a degradation map from a degraded image, comprising a neural network trained to extract a degradation map from a degraded source image such that when the degradation map is applied to a corresponding clean source image the loss between each degraded source image and its corresponding clean source image after the degradation map is applied is minimised,
wherein the neural network is trained using training data comprising pairs of images, each pair of images comprising a clean source image and a corresponding degraded source image wherein each degraded source image is a version of the clean source image with added spatially variant noise.

14. The apparatus according to claim 13, wherein, in the training data, each degraded source image is generated by adding spatially invariant noise to its corresponding clean source image to obtain a noisy image, and blending the noisy image with the clean source image according to varying intensity levels defined by a spatially variant mask.

15. The apparatus according to claim 13 or 14, wherein, in the training data, the spatially variant noise varies corresponding to a brightness distribution in the clean source image to have higher values in areas with lower brightness.

16. The apparatus according to any one of claims 13 to 15, wherein the neural network comprises an extraction convolutional layer configured to extract features from each degraded source image, a plurality of degradation feature extraction blocks configured to process the features to extract spatially invariant degradation features, and a plurality of mapping convolutional layers configured to map the remaining degradation features to a plurality of channels to generate the degradation map.

17. The apparatus according to any one of claims 13 to 16, wherein each degraded source image is a downsampled version of the clean source image.

18. An apparatus for super resolution imaging comprising:

an apparatus according to any one of claims 13 to 17 configured to extracting a pixel level degradation map from a degraded image;
an apparatus for generating a higher resolution image with reduced noise from the degraded image, configured to:

obtain a feature map of the degraded image; and
input the feature map to a second trained neural network to perform a pixel-wise feature modulation based on the pixel level degradation map to generate the higher resolution image with reduced noise.

19. The apparatus according to claim 18, wherein the second trained neural network comprises a plurality of spatial feature transformation blocks comprising convolutional layers having a 1X1 filter size configured to transform the feature map based on the degradation map.

FIGURE 1

(a)  (b)  (c)

FIGURE 2

FIGURE 3

FIGURE 4

LR     DASR [ ]     Real-ESRNet [ ]    MM-RealSRNet [ ]    BSRNet [ ]    Real-SwinIR-L [ ]   **PDA-RWSR (Ours)**    Ground-truth

FIGURE 5

FIGURE 6

Europäisches
Patentamt

European
Patent Office

Office européen
des brevets

# EUROPEAN SEARCH REPORT

**Application Number**

EP 24 15 9206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/148130 A1 (TANG WENYI [CN] ET AL) 12 May 2022 (2022-05-12) * paragraphs [0252] - [0257], [0285] - [0297]; figures 15,20-24 * | 1-19 | INV. G06T3/4053 G06N3/0464 G06N3/08 G06T5/70 |
| A | CN 111 667 410 B (TENCENT TECH SHENZHEN CO LTD) 14 September 2021 (2021-09-14) * the whole document * | 1-19 | |
| A | WO 2022/183988 A1 (UNIV HONG KONG [CN]) 9 September 2022 (2022-09-09) * the whole document * | 1-19 | |

**TECHNICAL FIELDS SEARCHED (IPC)**

G06T
G06N

The present search report has been drawn up for all claims

| Place of search | Date of completion of the search | Examiner |
|---|---|---|
| Munich | 19 July 2024 | Tillier, Christophe |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

## ANNEX TO THE EUROPEAN SEARCH REPORT
## ON EUROPEAN PATENT APPLICATION NO.

EP 24 15 9206

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | | Publication date | Patent family member(s) | | Publication date |
|---|---|---|---|---|---|
| US 2022148130 | A1 | 12-05-2022 | CN | 113892116 A | 04-01-2022 |
| | | | EP | 3987454 A1 | 27-04-2022 |
| | | | US | 2022148130 A1 | 12-05-2022 |
| | | | WO | 2020252764 A1 | 24-12-2020 |
| CN 111667410 | B | 14-09-2021 | NONE | | |
| WO 2022183988 | A1 | 09-09-2022 | CN | 117223028 A | 12-12-2023 |
| | | | EP | 4302240 A1 | 10-01-2024 |
| | | | US | 2024095889 A1 | 21-03-2024 |
| | | | WO | 2022183988 A1 | 09-09-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20220148130 A

### Non-patent literature cited in the description

- **JINGYUN LIANG et al.** Image restoration using swin transformer. *IEEE International Conference on Computer Vision Workshops,* 2021
- Metric learning based interactive modulation for real-world super-resolution. **CHONG MOU et al.** European Conference on Computer Vision. Springer, 2022, 723-740
- **KAI ZHANG et al.** Designing a practical degradation model for deep blind image super-resolution. *IEEE International Conference on Computer Vision,* 2021, 4791-4800
- **JIE LIANG et al.** Efficient and degradation-adaptive network for real-world image super-resolution. *European Conference on Computer Vision,* 2022
- **SYED WAQAS ZAMIR et al.** Restormer: Efficient transformer for high-resolution image restoration. *CoRR, abs/2111.09881,* 2021
- **EIRIKUR AGUSTSSON ; RADU TIMOFTE.** Ntire 2017 challenge on single image super-resolution: Dataset and study. *The IEEE Conference on Computer Vision and Pattern Recognition (CVPR) Workshops,* July 2017
- **LIM ; SANGHYUN SON ; KEEWON KIM ; SEUNGJUN NAH ; KYOUNG MU LEE.** Enhanced deep residual networks for single image super-resolution. *Proceedings of the IEEE conference on computer vision and pattern recognition workshops,* 2017, 136-144
- **KAI ZHANG ; JINGYUN LIANG ; LUC VAN GOOL ; RADU TIMOFTE.** Designing a practical degradation model for deep blind image super-resolution. *IEEE International Conference on Computer Vision,* 2021, 4791-4800
- **SYED WAQAS ZAMIR ; ADITYA ARORA ; SALMAN H. KHAN ; MUNAWAR HAYAT ; FAHAD SHAHBAZ KHAN ; MING-HSUAN YANG.** Restormer: Efficient transformer for high-resolution image restoration. *CoRR, abs/2111.09881,* 2021
- **DIEDERIK P. KINGMA ; JIMMY BA. ADAM.** A method for stochastic optimization. *CoRR, abs/1412.6980,* 2014
- On single image scale-up using sparse-representations. **ROMAN ZEYDE ; MICHAEL ELAD ; MATAN PROTTER.** Curves and Surfaces: 7th International Conference, Avignon, France, June 24-30, 2010, Revised Selected Papers. Springer, 2012, vol. 7, 711-730
- **DAVID R. MARTIN ; CHARLESS C. FOWLKES ; DORON TAL ; JITENDRA MALIK.** A database of human segmented natural images and its application to evaluating segmentation algorithms and measuring ecological statistics. *Proceedings Eighth IEEE International Conference on Computer Vision. ICCV 2001,* 2001, vol. 2, 416-423
- **NARENDRA AHUJA JIA-BIN HUANG ; ABHISHEK SINGH.** Single image super-resolution from transformed self-exemplars. *2015 IEEE Conference on Computer Vision and Pattern Recognition (CVPR),* 2015, 5197-5206